# EUROPEAN PATENT SPECIFICATION

(11) **EP 2 534 381 B1**
(45) Date of publication and mention of the grant of the patent: **10.12.2014**
(21) Application number: 11705256.3
(22) Date of filing: 20.01.2011
(51) Int. Cl.: F04D 15/00, F04D 29/46, F04D 29/62, F01P 7/14, F01P 5/12, F16K 27/02

(54) **COOLING PUMP WITH A VALVE GROUP**
KÜHLPUMPE MIT VENTILGRUPPE
POMPE DE REFROIDISSEMENT POURVUE D'UN ENSEMBLE VANNE

(30) Priority: 08.02.2010 IT BS20100021
(43) Date of publication of application: 19.12.2012
(60) Divisional application: 13188771.3
(73) Proprietor: Industrie Saleri Italo S.P.A., 25065 Lumezzane, Brescia (IT)
(72) Inventor: TEBALDINI, Giovanni, 25065 Lumezzane Brescia (IT)
(74) Representative: Pulieri, Gianluca Antonio
(86) International application number: PCT/IB2011/050256
(87) International publication number: WO 2011/095907

(56) References cited:
- EP-A1- 1 653 311
- EP-A2- 2 131 042
- WO-A1-86/03809
- WO-A2-2007/025375
- DE-A1-102007 023 858
- JP-A- 57 191 498

## Description

The present invention relates to a cooling pump with a valve group in particular for the automobile sector.

It is well known that the cooling pump is the main component of the cooling circuit for thermal engines, especially in vehicles. Particular attention is therefore paid to the correct design of such components and to the continual improvement of their performance.

Examples of cooling pumps are illustrated in documents EP-A1-1503083 and PCT/IT2009/000269, in the Applicant's name and WO 86/03809 A1.

In particular, in the document PCT/IT2009/000269, the obturator downstream of the rotor plays an essential role.

The aim of the present invention is to make a cooling pump with a valve group comprising an obturator.

Such purpose is achieved by a cooling pump made according to claim 1.

The characteristics and advantages of the cooling pump according to the present invention will be evident from the description given below, made by way of a nonlimiting example, in accordance with the appended drawings wherein:
- figures 1a and 1b show a diagram of a cooling pump according to the present invention, according to one embodiment, respectively in a closed configuration and an open configuration;

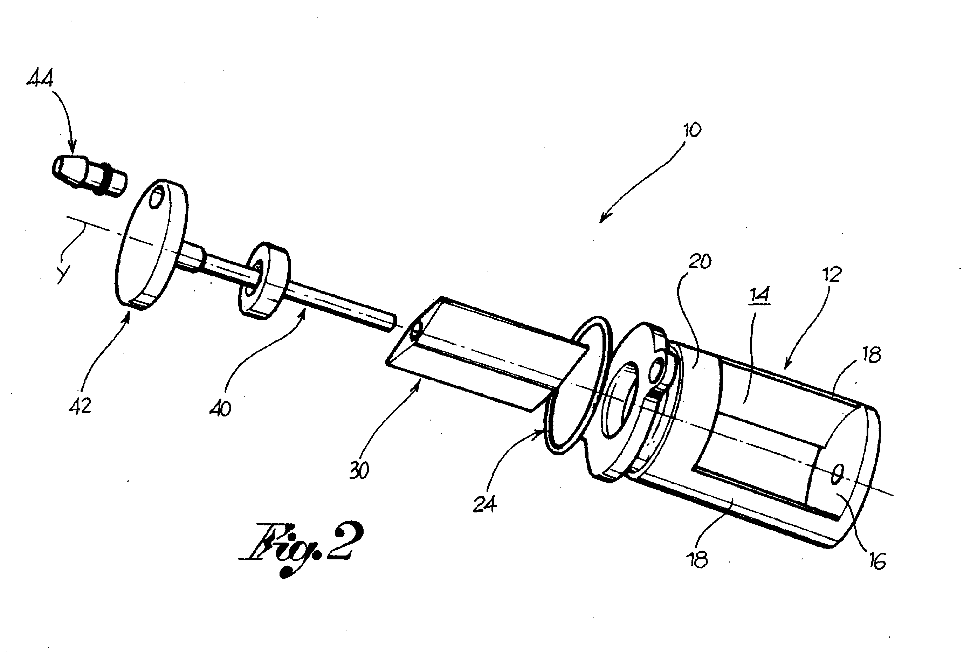

- figure 2 shows a valve group comprised in the cooling pump according to the present invention, in separate parts;

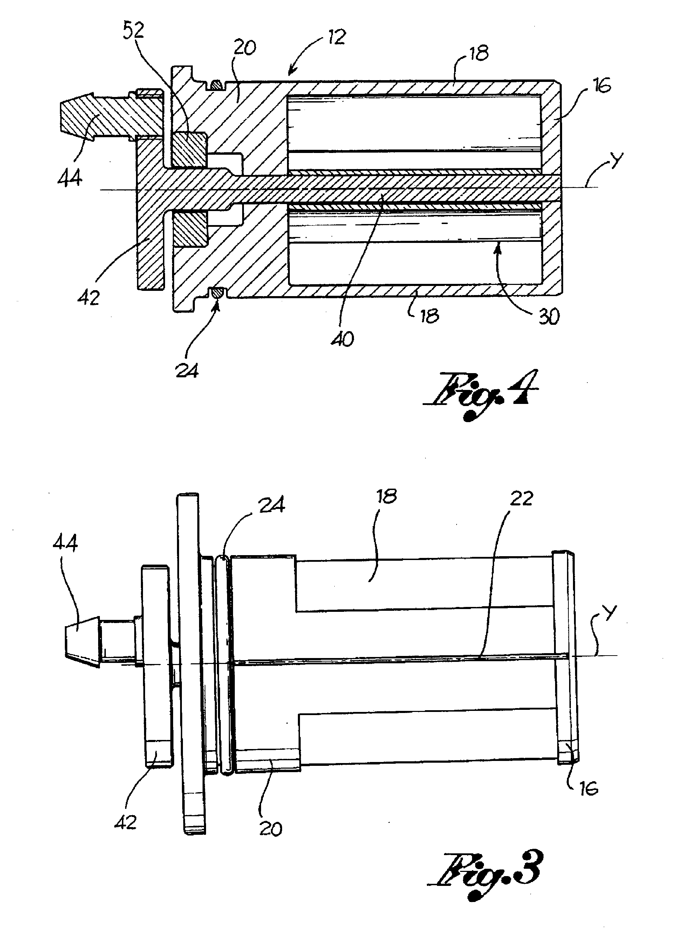

- figure 3 shows the valve group in figure 2, with the parts assembled;
- figure 4 shows a partially sectioned view of the valve group in figure 3;

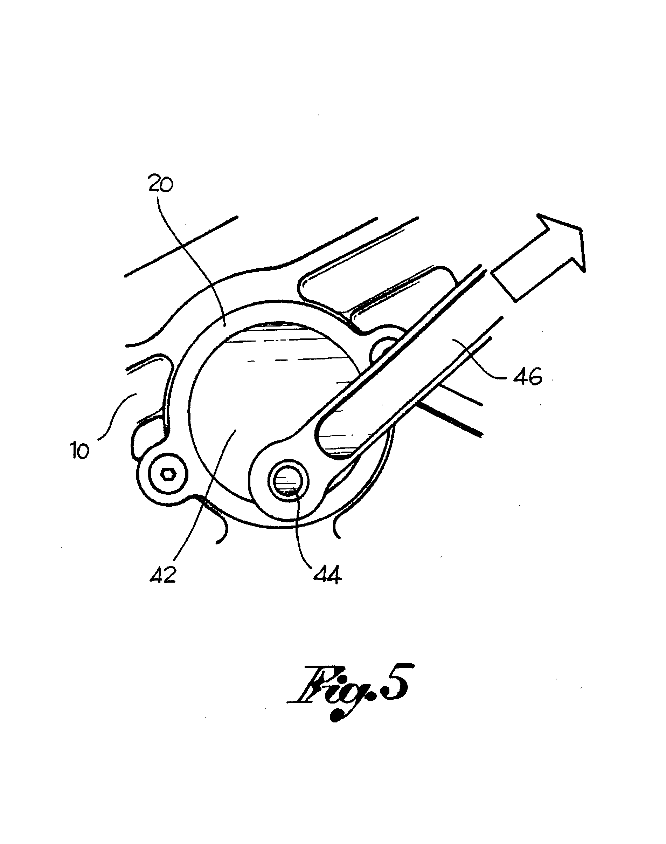

- figure 5 shows a detail of the valve group according to the present invention;

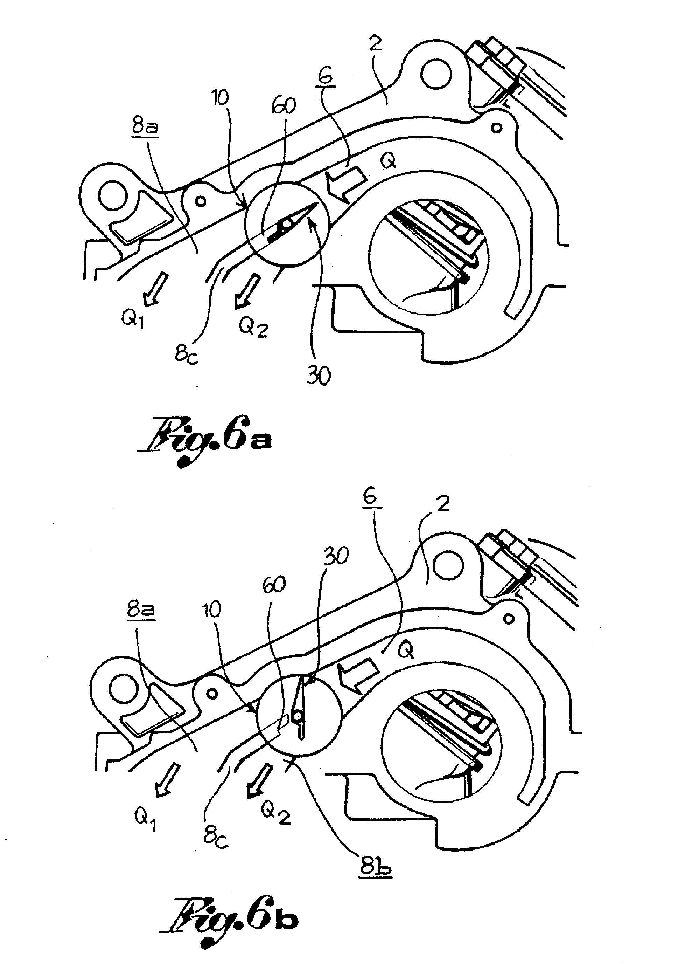

- figures 6a and 6b show a cooling pump containing the valve group of the present invention in a further embodiment variation.

According to one embodiment of the present invention, a mechanically driven cooling pump 1, in particular for vehicles, comprises a pump body 2 and a rotor 4 housed in the pump body 2, for example having a substantially circular shape.

The pump body 2 is connectable to the cooling circuit of the motor, and in particular is connectable to an upstream section of the circuit, from which the liquid is taken in, and a downstream section of the circuit, to which the liquid is supplied, under pressure, towards the motor.

The rotor 4, made to rotate around a rotor rotation axis, is suitable to take in the liquid from the upstream section of the circuit and to send it, under pressure to the downstream section of the circuit.

Downstream of the rotor, the pump body 2 has a delivery chamber 6 having a spiral shape, and a delivery pipe 8, which extends from the delivery chamber 6. The delivery chamber 6 and the delivery pipe 8 have no other apertures towards further pipes, except the aperture of the delivery pipe towards the downstream section of the cooling circuit.

The pump 1 further comprises a valve group 10, to limit, upon command, the passage of the liquid from the delivery chamber 6 to the delivery pipe 8.

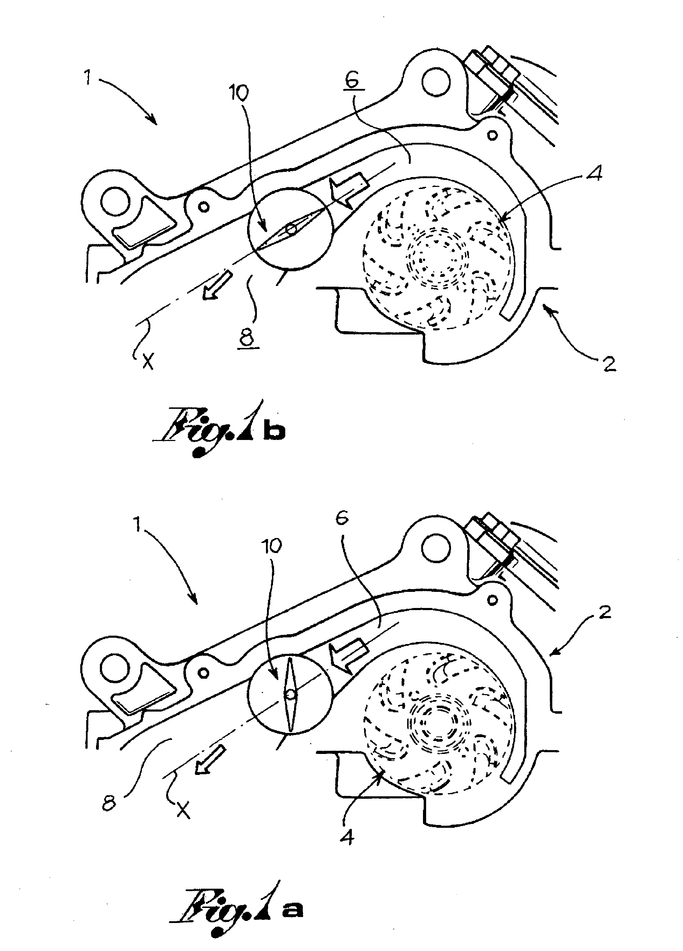

In particular, the valve group 10 is suitable, in a closed configuration, to obstruct the passage from the delivery chamber 6 to the delivery pipe 8, limiting or preferably preventing the passage of liquid from the delivery chamber to the delivery pipe (figure 1a).

In other words, when the valve group is in the closed configuration, the delivery chamber 6 is closed and the liquid remains in it, agitated by the rotating rotor.

In a configuration of maximum aperture, the valve group permits the passage of the maximum quantity possible of liquid from the delivery chamber to the delivery pipe (figure 1b).

According to the present invention, the pump body has a housing compartment and the valve group 10 can be inserted and extracted from the housing compartment, having a cartridge type structure.

In particular, the valve group 10 comprises a valve body 12 formed of an element elongated along a rotation axis Y, preferably having a cylindrical shape, provided with a through pipe 14.

The pipe 14 is delimited by a plate 16 on the bottom, by side walls 18, projecting axially from the plate 16, moulded circularly on the inside, and by a tubular head 20, which surmounts and joins the side walls 18 on the side opposite the plate 16.

The valve body 12 is preferably made in a single piece.

Preferably, the valve body 12 is provided with outer seals, for example in the form of cords 22 housed in grooves provided on the outer surface of the side walls 18, and/or in the form of O-rings 24 housed in a groove provided outside the head 20 or plate 16.

The valve group 10 further comprises an obturator 30, in the shape of a paddle, housed in the pipe 14 of the valve body 12 so as to swivel around the rotation axis Y and obstruct, in the closed configuration, the passage of the liquid through the pipe 14.

Moreover, the pump 1 comprises drive means suitable to act on the obturator 30 to take it from a closed configuration to an open configuration and vice versa.

According to a preferred embodiment, the drive means comprise a shaft 40 extending mainly along the rotation axis Y, connected to the obturator 30.

For example, the shaft 40 axially crosses the obturator 30 and engages at its bottom end with the plate 16, and at the other end with the head 20, for the rotatory support of the obturator. The shaft 40 projects moreover axially externally from the head 20 of the valve body.

Preferably, moreover, the drive means comprise a disc 42, connected to the shaft 40, in particular to the portion of this projecting from the head 20, and a pin 44, connected to the disc 42 in an eccentric position in relation to the rotation axis Y.

Preferably, moreover, the drive means comprise a rod 46 having, upon command, translatory movement, connected to the pin 44 in a rotatory manner.

According to an embodiment variation, the rod is connected to an actuator, such as a vacuum actuator, electromagnetic actuator, hydraulic or pneumatic actuator, electric actuator or the like.

The translation of the rod 46 determines the rotation of the obturator 30.

According to a preferred embodiment, moreover, the valve group comprises an oil retainer element 50, inserted on the shaft 40.

Moreover, the pump 1 comprises detecting means suitable to detect a condition of functioning of the vehicle, for example heat detection means able to measure the temperature of the cooling liquid or the temperature of the parts of the motor.

The drive means are operatively connected to the detecting means, to regulate the aperture of the obturator.

For example, the heat detection means measure the temperature of the parts of the motor and transmit such information to the drive means which, as long as the engine is cold, keep the obturator in a closed configuration. Progressively, as the temperature of the motor increases or according to a predefined function, the drive means move the obturator into an open configuration.

According to one embodiment of the pump, the delivery pipe 8 comprises a main branch 8a and a secondary branch 8b, divided by a bulkhead 8c.

In such embodiment, the valve group 10 comprises a fixed separation wall 60, housed in the pipe 14 of the valve body 12, which defines two separate exit paths from the pipe 14; when the valve group 10 is inserted in the pump body 2, it forms a continuation of the bulkhead 8c.

In the configuration of maximum aperture, the obturator 30 is aligned with the separation wall 60, and the liquid with a flow rate Q flows towards the main branch 8a and towards the secondary branch 8b of the delivery pipe 8.

For example, for a flow rate Q, in the configuration of maximum aperture, a flow of liquid Q1 flows towards the main branch 8a and a flow of liquid Q2 flows towards the secondary branch 8b, wherein Q1>Q2.

In the configuration of maximum closure, the obturator 30 obstructs only one of the two paths identified by the separation wall 60, and in particular the path relative to the main branch 8a.

For example, in the configuration of maximum closure, liquid does not flow toward the main branch 8a (Q1=0 l/min) and a flow of liquid Q2 flows towards the secondary branch 8b, wherein Q1<Q2.

Innovatively, the cooling pump according to the invention enables rationalised production, in that it makes it possible to make the valve group separately from the pump body, following improved design criteria, and then to assemble them together simply and economically.

It is clear that a person skilled in the art may make modifications to the pump described above so as to satisfy contingent requirements while remaining within the sphere of protection as defined by the following claims.

## Claims

1. Cooling pump (1) for vehicles comprising:
- a pump body (2) connectable to an intake section of a cooling circuit and to a delivery section of said circuit;
- a rotor (4), housed in the pump body, suitable to take in the liquid from the intake section and to send the pressurised liquid to the delivery section for continuous rotation around a rotation axis;
wherein, in the pump body (2) are realized a delivery chamber (6), positioned downstream of the rotor (4), and
a delivery pipe (8) connected to the delivery chamber (6), connectable to the delivery section of the cooling circuit;
- a valve group (10) positioned between the delivery chamber (6) and the delivery pipe (8) to partialise, in a closed configuration, the passage of the liquid from the delivery chamber (6) to the delivery pipe (8);
**characterized by** the fact that the valve group (10) comprises a valve body (12) formed of an element elongated along a rotation axis Y, provided with a through pipe (14), and an obturator (30), housed in the pipe (14), so as to swivel around the rotation axis Y, suitable to obstruct, in the closed configuration, the passage of liquid through the pipe (14), and
wherein the pump body (2) has a housing compartment and the valve group (10), having a cartridge type structure, is insertable and extractable from the housing compartment.

2. Pump according to the preceding claim, wherein the valve body (12) comprises a plate (16) on the bottom, side walls (18), projecting axially from the plate (16), and a tubular head (20), which surmounts and joins the side walls (18) on the side opposite the plate (16), the pipe (14) being defined between said side walls (18).

3. Pump according to any of the previous claims, wherein the valve body (12) is made in a single piece.

4. Pump according to claim 2 or 3, wherein the valve body (12) is provided with outer seals in the form of cords (22) housed in grooves provided on the outer surface of the side walls (18),and/or in the form of O-rings (24) housed in a groove provided outside the head (20) or plate(16).

5. Pump according to any of the previous claims, comprising drive means suitable to act on the obturator (30) to move it from a closed configuration to an open configuration and vice versa.

6. Pump according to claim 5, wherein the drive means comprise a shaft (40) connected to the obturator (30), a pin (44), connected eccentrically to the shaft (40) and a
rod (46) having, upon command, translatory movement, connected to the pin (44) in a rotatory manner.

7. Pump according to claim 6, wherein the shaft (40) axially crosses the obturator (30) and engages at its ends with the valve body (12) for the rotatory support of the obturator.

8. Pump according to claim 6 or 7, wherein the valve group (10) comprises an oil retainer element (50), inserted on the shaft (40), to form a seal to the oil.

9. Pump according to any of the claims from 5 to 8, comprising detecting means suitable to detect a condition of functioning of the vehicle, said detecting means comprising heat detection means able to measure the temperature of the cooling liquid or the temperature of the parts of the motor, operatively connected to the drive means.

10. Pump according to any of the previous claims, wherein the valve group (10) comprises a fixed separation wall (60) housed in the pipe (14), suitable to define two separate exit paths of the liquid in transit in the pipe (14).

11. Pump according to claim 10, wherein the obturator acts in conjunction with the fixed separation wall (60), to close only one exit path in the closed configuration.

12. Pump according to any of the previous claims, wherein the delivery pipe (8) comprises a main branch (8a) and a secondary branch (8b), divided by a bulkhead (8c).

## Patentansprüche

1. Kühlpumpe (1) für Fahrzeuge, umfassend:
einen Pumpenkörper (2), welcher mit einem Aufnahmeabschnitt von einem Kühlkreislauf und einem Zufuhrabschnitt von dem Kreislauf verbindbar ist;
einen Rotor (4), welcher in dem Pumpenkörper aufgenommen ist, welcher dazu ausgebildet ist, die Flüssigkeit von dem Aufnahmeabschnitt aufzunehmen und die unter Druck stehende Flüssigkeit an den Zufuhrabschnitt zu überführen, zur durchgängigen Rotation um eine Rotationsachse;
wobei in dem Pumpenkörper (2) eine Zufuhrkammer (6), welche stromabwärts des Rotors (4) angeordnet ist, und eine Zufuhrröhre (8), welche mit der Zufuhrkammer (6) verbunden ist, verbindbar mit dem Zufuhrabschnitt von dem Kühlkreislauf, verwirklicht sind;
eine Ventilgruppe (10), welche zwischen der Zufuhrkammer (6) und der Zufuhrröhre (8) angeordnet ist, um den Durchgang der Flüssigkeit von der Zufuhrkammer (6) an die Zufuhrröhre (8) in einem geschlossenen Aufbau zu partialisieren;
**dadurch gekennzeichnet, dass** die Ventilgruppe (10) einen Ventilkörper (12), welcher aus einem Element ausgebildet ist, welches entlang einer Rotationsachse Y erstreckt ist, welcher mit einer Durchgangsröhre (14) bereitgestellt ist, und ein Absperrorgan (30) umfasst, welches derart in der Röhre (14) aufgenommen ist, dass es sich um die Rotationsachse Y dreht, wobei es dazu geeignet ist, im geschlossenen Aufbau den Durchgang der Flüssigkeit durch die Röhre (14) zu blockieren, und
wobei der Pumpenkörper (2) ein Aufnahmegehäuse umfasst,
und wobei die Ventilgruppe (10), welche einen Aufbau vom Kassettentyp hat, in das Aufnahmegehäuse einführbar und aus diesem entnehmbar ist.

2. Pumpe nach dem vorhergehenden Anspruch, wobei der Ventilkörper (12) eine Platte (16) am Bodenbereich, Seitenwände (18), welche axial von der Platte (16) vorragen, und einen Rohrkopf (20), welcher die Seitenwände (18) an der Seite, welche der Platte (16) gegenüberliegt, überragt und mit diesen verbunden ist, wobei die Röhre (14) zwischen den Seitenwänden (18) definiert ist.

3. Pumpe nach einem der vorhergehenden Ansprüche, wobei der Ventilkörper (12) aus einem einzelnen Stück erstellt ist.

4. Pumpe nach Anspruch 2 oder 3, wobei der Ventilkörper (12) mit Außendichtungen in der Form von Bändern (22), welche in Nuten aufgenommen sind, welche an der Außenfläche von den Seitenwänden (18) bereitgestellt sind, und/oder in der Form von O-Ringen (24) bereitgestellt ist, welche in einer Nut aufgenommen sind, welche außerhalb des Kopfes (20) oder der Platte (16) bereitgestellt ist.

5. Pumpe nach einem der vorhergehenden Ansprüche, umfassend ein Antriebselement, welches dazu ausgebildet ist, derart auf das Absperrorgan (30) einzuwirken, dass es sich von einer geschlossenen Konfiguration in eine geöffnete Konfiguration und umgekehrt bewegt.

6. Pumpe nach Anspruch 5, wobei das Antriebselement eine Welle (40), welche mit dem Absperrorgan (30) verbunden ist, einen Stift (44), welcher exzentrisch mit der Welle (40) verbunden ist, und einen Stab (46), welcher auf eine Anweisung hin eine translatorische Bewegung vornimmt, welcher mit dem Stift (44) auf eine drehbare Art und Weise verbunden ist, umfasst.

7. Pumpe nach Anspruch 6, wobei die Welle (40) das Absperrorgan (30) axial kreuzt und an ihren Enden mit dem Ventilkörper (12) zur rotatorischen Unterstützung des Absperrorgans in Eingriff steht.

8. Pumpe nach Anspruch 6 oder 7, wobei die Ventilgruppe (10) ein Ölaufnahmeelement (50) umfasst, welches auf der Welle (40) eingesetzt ist, um gegenüber dem Öl eine Dichtung auszubilden.

9. Pumpe nach einem der Ansprüche 5 bis 8, umfassend ein Erfassungselement, welches dazu ausgebildet ist, einen Funktionszustand des Fahrzeugs zu erfassen, wobei das Erfassungselement ein Wärmeerfassungselement umfasst, welches dazu ausgebildet ist, die Temperatur von der Kühlflüssigkeit oder die Temperatur von Teilen des Motors zu messen, wobei es mit dem Antriebselement betriebsfähig verbunden ist.

10. Pumpe nach einem der vorhergehenden Ansprüche, wobei die Ventilgruppe (10) eine fixierte Trennwand (60) umfasst, welche in der Röhre (14) aufgenommen ist, welche dazu ausgebildet ist, zwei separate Austrittspfade der Flüssigkeit bei der Durchleitung in der Röhre (14) zu definieren.

11. Pumpe nach Anspruch 10, wobei das Absperrorgan im Zusammenwirken mit der fixierten Trennwand (60) dazu wirkt, lediglich einen Austrittspfad in dem geschlossenen Aufbau zu schließen.

12. Pumpe nach einem der vorhergehenden Ansprüche, wobei die Zufuhrröhre (8) einen Hauptzweig (8a) und einen Sekundärzweig (8b) umfasst, welche durch eine Trennwand (8c) unterteilt sind.

## Revendications

1. Pompe de refroidissement (1) pour des véhicules comprenant :
- un corps de pompe (2) pouvant être relié à une section d'admission d'un circuit de refroidissement et à une section de distribution dudit circuit ;
- un rotor (4) logé dans le corps de pompe adapté pour prendre le liquide de la section d'admission et pour envoyer le liquide pressurisé à la section de distribution pour une rotation continue autour d'un axe de rotation ;
dans laquelle, dans le corps de pompe (2), sont réalisés une chambre de distribution (6), positionnée en aval du rotor (4), et un tuyau de distribution (8) relié à la chambre de distribution (6), pouvant être relié à la section de distribution du circuit de refroidissement ;
- un groupe de soupape (10), positionné entre la chambre de distribution (6) et le tuyau de distribution, (8) pour diviser, dans une configuration fermée, le passage du liquide de la chambre de distribution (6) au tuyau de distribution (8) ;
**caractérisée par le fait que** le groupe de soupape (10) comprend un corps de soupape (12) formé d'un élément allongé le long d'un axe de rotation Y, doté d'un tuyau continu (14), et un obturateur (30), logé dans le tuyau (14), de sorte à tourner autour de l'axe de rotation Y adapté pour obstruer, dans la configuration fermée, le passage de liquide par le tuyau (14), et
dans laquelle le corps de pompe (2) présente un compartiment de logement et le groupe de soupape (10) possédant une structure de type cartouche peut être inséré et extrait du compartiment de logement.

2. Pompe selon la revendication précédente, dans laquelle le corps de soupape (12) comprend une plaque (16) sur le fond, des parois latérales (18), faisant saillie axialement de la plaque (16), et une tête tubulaire (20), qui surmonte et joint les parois latérales (18) sur le côté en regard de la plaque (16), le tuyau (14) étant défini entre lesdites parois latérales (18).

3. Pompe selon l'une quelconque des revendications précédentes, dans laquelle le corps de soupape (12) est constitué d'une seule pièce.

4. Pompe selon la revendication 2 ou 3, dans laquelle le corps de soupape (12) est doté de joints extérieurs sous la forme de câbles (22) logés dans des rainures prévues sur la surface extérieure des parois latérales (18) et/ou sous la forme de joints toriques (24) logés dans une rainure prévue à l'extérieur de la tête (20) ou la plaque (16).

5. Pompe selon l'une quelconque des revendications précédentes, comprenant des moyens d'entraînement adaptés pour agir sur l'obturateur (30) pour le déplacer d'une configuration fermée à une configuration ouverte et vice versa.

6. Pompe selon la revendication 5, dans laquelle les moyens d'entraînement comprennent un arbre (40) relié à l'obturateur (30), une pointe (44) reliée de manière excentrique à l'arbre (40) et une tige (46) réalisant sur commande un mouvement translatoire relié à la pointe (44) de manière rotative.

7. Pompe selon la revendication 6, dans laquelle l'arbre (40) croise axialement l'obturateur (30) et s'engage sur ses extrémités avec le corps de soupape (12) pour le support rotatif de l'obturateur.

8. Pompe selon la revendication 6 ou 7, dans laquelle le groupe de soupape (10) comprend un élément de retenue d'huile (50), inséré sur l'arbre (40), pour former un joint par rapport à l'huile.

9. Pompe selon l'une quelconque des revendications 5 à 8, comprenant des moyens de détection adaptés pour détecter un état de fonctionnement du véhicule, lesdits moyens de détection comprenant des moyens de détection de chaleur capables de mesurer la température du liquide de refroidissement ou la température des pièces du moteur, reliées en fonctionnement aux moyens d'entraînement.

10. Pompe selon l'une quelconque des revendications précédentes, dans laquelle le groupe de soupape (10) comprend une paroi de séparation fixe (60) logée dans le tuyau (14), adaptée pour définir deux voies de sortie séparées du liquide en transit dans le tuyau (14).

11. Pompe selon la revendication 10, dans laquelle l'obturateur agit conjointement avec la paroi de séparation fixe (60) pour fermer une seule voie de sortie dans la configuration fermée.

12. Pompe selon l'une quelconque des revendications précédentes, dans laquelle le tuyau de distribution (8) comprend une branche principale (8a) et une branche secondaire (8b) divisées par une cloison (8c).
